# EUROPÄISCHE PATENTANMELDUNG

(11) **EP 0 807 702 A1**
(43) Veröffentlichungstag der Anmeldung: **19.11.1997**
(21) Anmeldenummer: 96810307.7
(22) Anmeldetag: 15.05.1996
(51) Int. Cl.: D03C 1/14, D03C 5/00, F16C 11/04

(54) **Einrichtung zum Befestigen eines Körpers und Schafttrieb mit einer derartigen Einrichtung**

(71) Anmelder: SULZER RÜTI AG, CH-8630 Rüti (CH)
(72) Erfinder: Oertli, Gustav, 8311 Brütten (CH)
(74) Vertreter: Heubeck, Bernhard

(57) **Zusammenfassung**

Die Einrichtung weist einen spreizbaren Tragring (11), auf dem ein Körper (8) angeordnet ist und der in Bohrungen (7) eingesetzt ist und ein Verbindungselement (12, 13) auf, das in den Tragring einsetzbar und dazu bestimmt ist, den Tragring zu spreizen. Diese Einrichtung ist billig herstellbar und einfach montierbar und eignet sich insbesondere zur Verbindung von drehbeweglichen Teilen bei eingeschränkten Platzverhältnissen.

## Beschreibung

Die Erfindung betrifft eine Einrichtung zum Befestigen eines Körpers gemäss dem Oberbegriff des Anspruches 1 und einen Schafttrieb mit einer solchen Einrichtung.

In der DE-A-31 31 740 ist eine Vorrichtung dieser Art beschrieben. Diese Vorrichtung umfasst zwei parallel zueinander angeordnete Teile, einen Tragring und einen Schraubkörper. Die Teile weisen Einzüge auf, die nach innen gerichtet sind und auf welchen der Körper angeordnet ist. Ein Einzug ist mit Innengewinde versehen. Mittels des Gewindekörpers werden die Teile und der Körper zusammengepresst.

Als nachteilig erweist sich bei dieser Vorrichtung der Aufwand bei der Herstellung und insbesondere bei der Wartung. Zum Entfernen des Tragringes ist nach dem Entfernen des Schraubkörpers mindestens ein Teil soweit herauszubiegen, dass der Tragring vom Einzug am anderen Teil abgezogen werden kann. Damit besteht die Gefahr, dass der Teil plastisch verformt wird.

Der Erfindung liegt die Aufgabe zugrunde, eine Einrichtung zum Befestigen eines Körpers zu schaffen, welche einfach zu montieren und billig herstellbar ist.

Diese Aufgabe wird erfindungsgemäss mit den Merkmalen des Anspruches 1 gelöst.

Die Vorteile der Erfindung sind in der vereinfachten Herstellung und Montage und in der Anwendung innerhalb einer Webmaschine zu sehen.

Derartige Einrichtungen können vielfach innerhalb einer Webmaschine angewendet werden, insbesondere an Vorrichtungen, die eine Relativbewegung ausführen und eng beieinander liegend angeordnet sind, z.B. Rollenzüge für Litzen, Triebe für Webschäfte oder dgl..

Dadurch, dass die Einrichtung bündig mit den Aussenflächen der Abschnitte ist, können damit ausgerüstete Vorrichtungen sehr eng beieinander angeordnet werden.

Nachfolgend wird die Erfindung anhand der beiliegenden Zeichnungen erläutert.

Es zeigen:
- Fig. 1: Eine räumliche Darstellung einer Antriebsvorrichtung für die Webschäfte;
- Fig. 2: eine Ansicht in Richtung des Pfeiles "A" in Fig. 1;
- Fig. 3: ein Schnitt entlang der Linie B-B in Fig. 2, welcher eine bevorzugte Ausführungsform einer erfindungsgemässen Einrichtung darstellt;
- Fig. 4: die Einrichtung gemäss Fig. 3 in auseinander gezogener Darstellung;
- Fig. 5: eine Ansicht eines Elementes der erfindungsgemässen Einrichtung;
- Fig. 6: ein Schnitt entlang der Linie C-C in Fig. 5;
- Fig. 7: ein Schnitt entlang der Linie B-B in Fig. 2, eine zweite Ausführungsform einer erfindungsgemässen Einrichtung;
- Fig. 8: ein Schnitt entlang der Linie B-B in Fig. 2, eine dritte Ausführungsform einer erfindungsgemässen Einrichtung;
- Fig. 9: eine räumliche Darstellung eines Hilfsmittels zur Montage und Demontage der Einrichtung;
- Fig. 10: ein Schnitt durch eine vierte Ausführungsform einer erfindungsgemässen Einrichtung,
- Fig. 11: die Einrichtung nach Fig. 10 für einen Rollenzug im Schnitt und
- Fig. 12: ein Schnitt durch eine Modifikation der Ausführungsform gemäss Fig. 11.

Wie bereits erwähnt, kann die hier in Rede stehende Einrichtung an verschiedenen Stellen einer Webmaschine eingesetzt werden. In der nachfolgenden Beschreibung werden lediglich zwei Anwendungsbeispiele genannt.

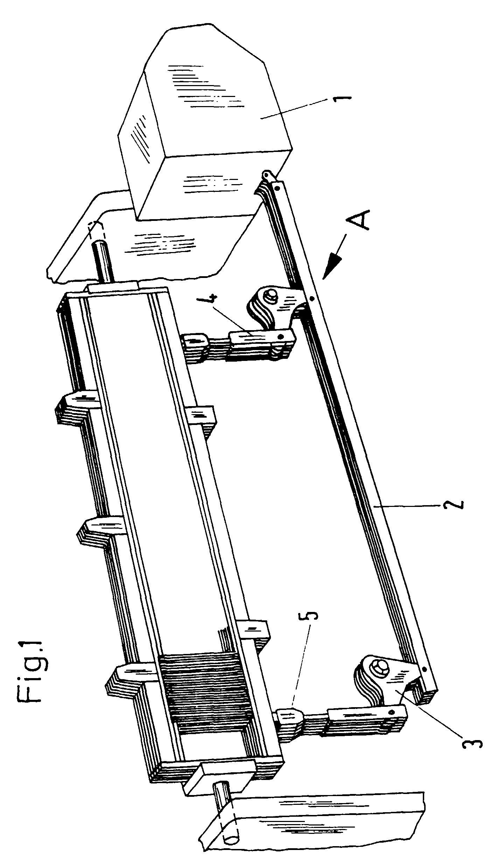

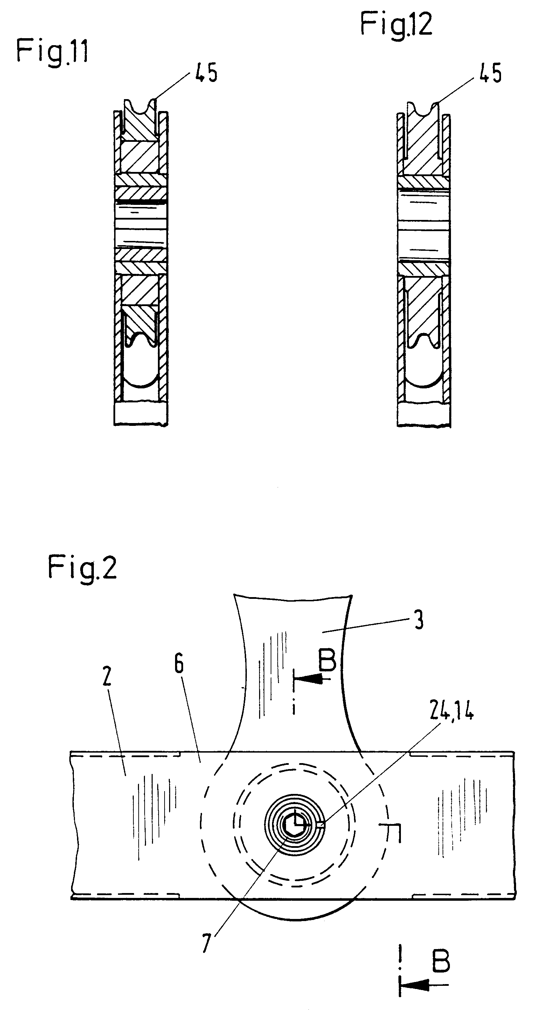

Es wird auf die Figuren 1 und 2 Bezug genommen. Die Fig. 1 zeigt eine Einrichtung zum auf- und abbewegen von Webschäften, die im wesentlichen aus einer Antriebsvorrichtung 1, Schafttriebstangen 2, Kniehebeln 3 und Stossstäbe 4 besteht. Die Webschäfte sind über Kupplungen 5 mit den Stossstäbe 4 verbunden. Die Schafttriebstangen 2 und die Stossstäbe 4 sind Rohre mit rechteckigem Querschnitt, während die Kniehebel 3 aus Vollmaterial bestehen. An der Anlenkstelle weist das Rohr an den Schmalseiten jeweils eine Ausnehmung 6, um den Kniehebel 3 einzusetzen und an den Breitseiten jeweils eine Bohrung 7 auf, um die Einrichtung aufzunehmen. Die Kniehebel 3 sind jeweils an eine Schafttriebstange 2 und an eine Stossstäbe 4 angelenkt (Fig. 2).

Hierzu ist die erfindungsgemässe Einrichtung vorgesehen. Die Anlenkung erfolgt über ein Lager, z.B. ein Gleitlager, wobei der Körper 8 und eine Gleithülse 9 aus Kunststoff die Lagerteile bilden.

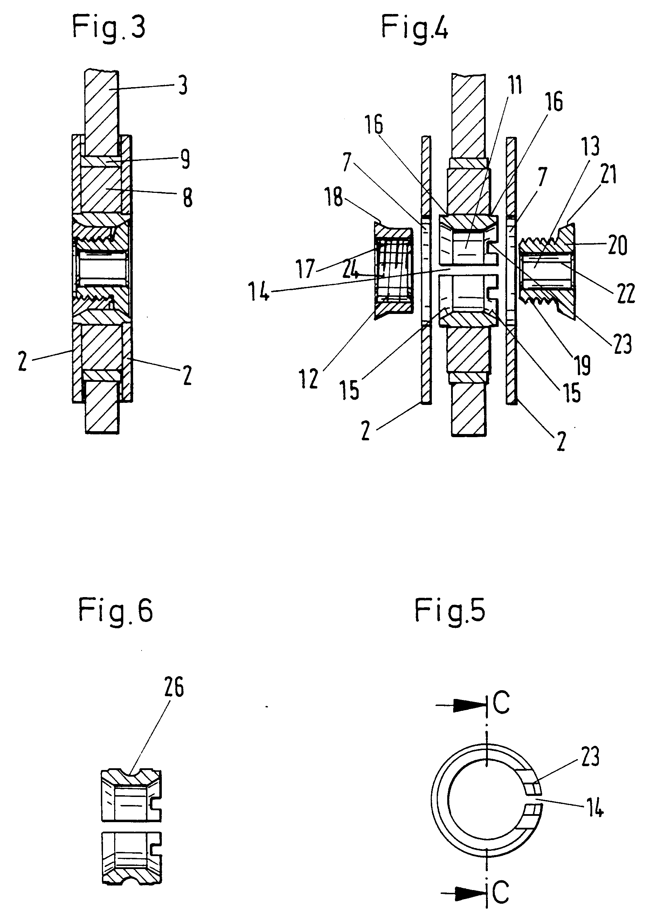

Es wird auf die Figuren 3 bis 5 Bezug genommen. Die Einrichtung umfasst einen Tragring 11 sowie eine erste und zweite Gewindehülse 12, 13. Der Tragring 11 weist einen Schlitz 14 auf, der axial verläuft. An den Stirnseiten ist der Tragring jeweils mit einer Ansenkung 15 versehen. Ferner weist der Tragring zwei eine Schulter 16 bildende Abschnitte auf. Die erste Gewindehülse 12 hat ein Innengewinde 17 und an einer Stirnseite einen konischen Abschnitt 18. Im konischen Abschnitt 18 der ersten Gewindehülse 12 ist eine Nut 24 ausgebildet. Die zweite Gewindehülse 13 hat ein zum Innengewinde der ersten Gewindehülse 12 passendes Aussengewinde 19 und an einer Stirnseite einen Ansatz 20 mit einem konischen Abschnitt 21. Die zweite Gewindehülse 13 ist mit einem Innensechskant 22 versehen. Ferner sind zwei Ausnehmungen 23 am Tragring 11 zum Einführen eines Werkzeuges (nicht dargestellt) vorgesehen.

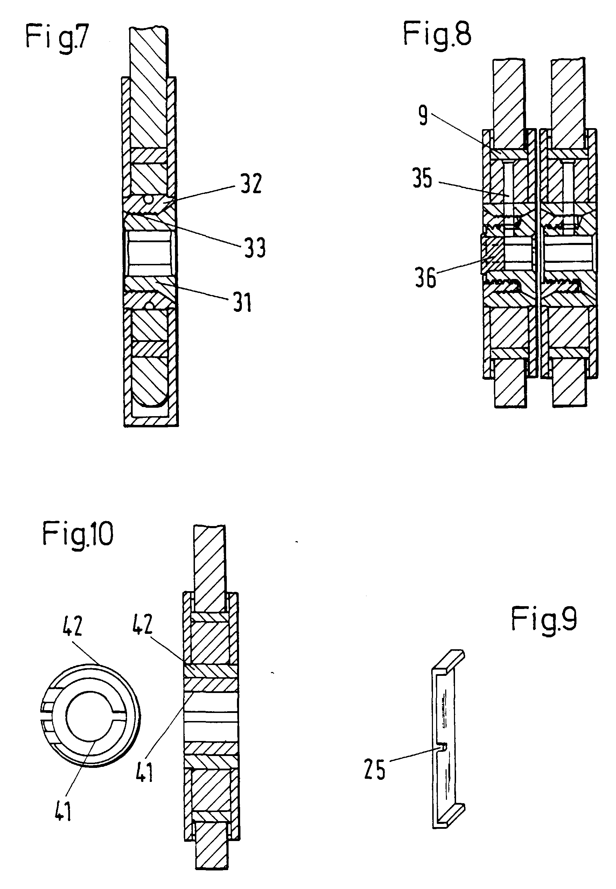

Zur Montage wird der mit dem Lagerteil 8 und der Gleithülse 9 ausgerüstete Kniehebel 3 in die Ausnehmung 6 eingesetzt, so dass die Bohrung im Lagerteil 8 mit den Bohrungen 7 fluchten. Danach wird der Tragring 11 eingesetzt, wobei mittels eines Werkzeuges (nicht dargestellt) der Ring zusammengezogen und in die Bohrungen eingestossen wird. Nach der Freigabe nimmt der Tragring 11 seine ursprüngliche Form an und liegt dann an den Wandteilen 2 des Vierkantrohres und am Lagerteil 8 an. Danach werden die erste und zweite Gewindehülse 12, 13 in den Tragring 11 eingesetzt und miteinander verschraubt. Die konischen Abschnitte 18, 21 der Gewindehülsen kommen mit den Ansenkungen 15 im Tragring in Eingriff und spreizen den Tragring bzw. setzen diesen fest. Dadurch wird der Tragring gegen die Wandteile des Vierkantrohres 2 und gegen den Lagerteil 8 gepresst, womit die Verbindung des Kniehebels 3 mit der Schafttriebstange 2 oder dem Stossstab hergestellt ist. Die Schultern 16 verhindern ein axiales Verrutschen. Zur Erleichterung der Montage und Demontage der Einrichtung ist ein Hilfsmittel vorgesehen, das in Fig. 9 dargestellt ist. Dieses Hilfsmittel weist einen Ansatz 25 auf, der in die Nut 24 ragt (Fig. 4), so dass die Drehung der ersten Gewindehülse 12 und des Tragringes 11 verhindert wird.

Aus der vorstehenden Beschreibung ist die vorteilhafte Montage bzw. Demontage ersichtlich.

Wie die Figur 6 zeigt, kann der Tragring 11 mit einer Rille 26 versehen sein. Mit dieser Schwächung wird eine Gelenkfunktion erzielt, so dass eine Dreipunktauflage Wandteil - Lagerteil - Wandteil erzielt werden kann.

Bei der Ausführungsform gemäss Figur 7 ist anstelle der ersten und zweiten Gewindehülse gemäss Figuren 3 und 4 lediglich eine Gewindehülse 31 mit einem zylindrischen Aussengewinde vorgesehen. Die Spreizung des Tragringes 32 wird dadurch erreicht, dass am Tragring 32 ein konisches Innengewinde 33 vorgesehen wird. In diesem Fall muss lediglich die Gewindehülse 31 eingeschraubt werden, wodurch eine Vereinfachung erzielt wird. Gleichzeitig ist die untere Wandung der Schafttriebstange geschlossen, wodurch sich eine grössere Stabilität ergibt.

Um die Lagerschmierung zu ermöglichen, ist eine radial gerichtete Bohrung 35 vorgesehen, die sich ausgehend von der inneren Gewindehülse zu der Gleithülse 9 erstreckt. Mit dieser Ausführungsform kann eine gleichzeitige Schmierung von nebeneinander angeordneten Lagerstellen erzielt werden (Fig. 8).

Die Figur 10 zeigt eine Ausführungsform, bei welcher anstelle von Gewindehülsen ein Spreizring 41 in einen Tragring 42 eingesetzt wird. Diese Ausführungsform stellt in Hinblick auf die Herstellung bzw. Montage und Demontage die billigste bzw. einfachste Lösung dar.

Neben der Anwendung beim Schafttrieb eignet sich diese Ausführungsform zur Montage der Litzenrollen 45 in Rollenzügen für Jaquardmaschinen, wobei die Litzenrollen 45 zwischen zwei parallel zueinander angeordneten Stegen drehbeweglich gehalten sind (Fig. 11 und 12).

Die Einrichtung weist einen spreizbaren Tragring 11, auf dem ein Körper 8 angeordnet ist und der in Bohrungen 7 eingesetzt ist und ein Verbindungselement 12, 13 auf, das in den Tragring einsetzbar und dazu bestimmt ist, den Tragring zu spreizen. Diese Einrichtung ist billig herstellbar und einfach montierbar und eignet sich insbesondere zur Verbindung von drehbeweglichen Teilen bei eingeschränkten Platzverhältnissen.

## Patentansprüche

1. Einrichtung zum Halten eines Körpers zwischen zwei eine Durchbrechung aufweisenden, zueinander parallelen Abschnitten (2), mit einem Tragring (11, 32, 42), welche den Körper (8) und die Durchbrechung durchdringt und mit mindestens einem entfernbaren Verbindungselement (12, 13, 31, 41), um die Teile, den Körper und den Tragring zu verbinden, dadurch gekennzeichnet, dass der Tragring (11, 32, 42) ein spreizbarer Ring ist und dass das Verbindungselement ein Spannorgan (12, 13, 31, 41) ist, das in den Tragring einbringbar ist, um den Tragring zu spreizen oder radial zu stützen.

2. Einrichtung nach Anspruch 1, dadurch gekennzeichnet, dass die Durchbrechung eine Bohrung (7) ist und dass der Tragring (11) an den Endpartien (16) in den Bohrungen angeordnet ist.

3. Einrichtung nach einem der Ansprüche 1 oder 2, dadurch gekennzeichnet, dass der Tragring (11) mindestens einen Schlitz (14) aufweist, der axial verläuft.

4. Einrichtung nach einem der Ansprüche 1 bis 3, dadurch gekennzeichnet, dass das Spannorgan ein Spreizring (41) ist, der unter Vorspannung in den Tragring (42) eingsetzt ist.

5. Einrichtung nach einem der Ansprüche 1 bis 4, dadurch gekennzeichnet, dass der Tragring (32) ein konisches Innengewinde und das Spannorgan (31) ein zylindrisches Aussengewinde aufweist, die ineinander verschraubt sind, so dass der Tragring (32) gespreizt ist.

6. Einrichtung nach einem der Ansprüche 1 bis 5, dadurch gekennzeichnet, dass der Tragring (11) an den Stirnseiten jeweils eine Ansenkung (15) aufweist und dass das Spannorgan zwei Gewindehülsen (12, 13) mit einem konischen Abschnitt (18, 21) umfasst, die ineinander verschraubt und mit den Ansenkungen im Eingriff sind, so dass der Tragring mittels der Abschnitte (18, 21) gespreizt ist.

7. Einrichtung nach einem der Ansprüche 1 bis 6, dadurch gekennzeichnet, dass eine Rille (26) am Umfang des Tragringes (11, 32, 42) ausgebildet ist.

8. Einrichtung nach einem der Ansprüche 1 bis 7, dadurch gekennzeichnet, dass der Tragring und das Spannorgan jeweils Mittel (22, 23, 24, 25) zum Ansetzen eines Werkzeuges aufweist, um den Tragring und das Spannorgan ein- bzw. auszubringen.

9. Schafttrieb mit einer Schafttriebstange, einem Kniehebel, einem Stossstab und einer Einrichtung nach einem der Ansprüche 1 bis 8, dadurch gekennzeichnet, dass der Kniehebel (3) über die Einrichtung einerseits mit Schafttriebstange (2) und andererseits mit dem Stossstab (4) am Körper (8) drehbeweglich gelagert ist.

10. Rollenzuganordnung für eine Jacquardvorrichtung mit parallel zueinander angeordneten Stegen, mit Litzenrollen (45) und mit Einrichtungen nach einem der Ansprüche 1 bis 7 zum drehbeweglichen Halten der Rollen.
